(19) Europäisches Patentamt
European Patent Office
Office européen des brevets

(11) Publication number : **0 512 852 A1**

(12) # EUROPEAN PATENT APPLICATION

(21) Application number : **92304158.6**

(22) Date of filing : **08.05.92**

(51) Int. Cl.$^5$ : **G11B 7/00,** G11B 25/02, G11B 7/24, G11B 7/26

(30) Priority : **08.05.91 KR 744491**

(43) Date of publication of application : **11.11.92 Bulletin 92/46**

(84) Designated Contracting States : **DE FR GB NL**

(71) Applicant : **GOLD STAR CO. LTD**
**20 Yoido-Dong, Yongdungpo-gu**
**Seoul (KR)**

(72) Inventor : **Lee, Sung Chan**
**1016-207 Joogong Apt, Haan-Dong**
**Kwangmyoung-City, Kyounggi-Do (KR)**

(74) Representative : **LLOYD, Patrick Alexander Desmond**
**Reddie & Grose 16 Theobalds Road**
**London WC1X 8PL (GB)**

(54) **Cylindrical optical record medium and driving apparatus thereof.**

(57) A cylindrical optical record medium 110 and its driving apparatus which can simplify the constitution of the optical record medium driving apparatus is disclosed. For this, the cylindrical optical record medium has a photoresist layer whose circumferential surface can be removed by an optical beam, thereby storing information. The apparatus for driving the cylindrical optical record medium comprises a constant speed motor 109 for rotating the cylindrical optical record medium at a constant speed, a pick-up 107 for recording and reading out the information on the circumferential surface of cylindrical optical record medium, and an information processing circuit 101,102,103 for supplying the information to be recorded to the pick-up and processing the information read out by the pick-up.

FIG.4

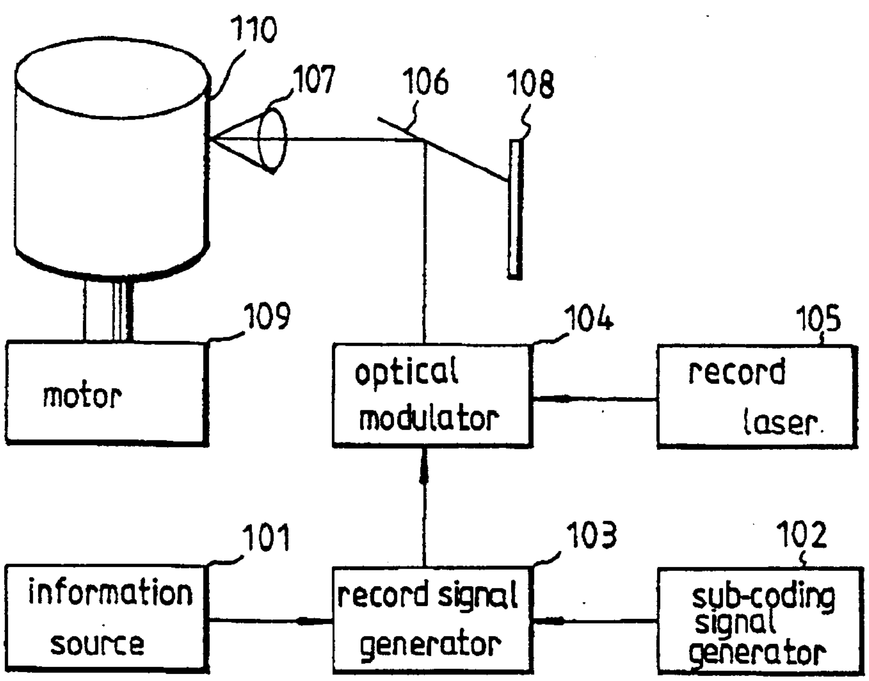


EP 0 512 852 A1

## Background of the Invention

The present invention relates to an optical record medium which records information by an optical signal, and more particularly to a cylindrical optical record medium which can simplify the constitution of the apparatus for driving the optical record medium, and the driving apparatus of the cylindrical optical record medium.

The conventional optical record medium such as a laser disc, a compact disc, a compact video disc, etc. has a circular shape, and a photoresist layer which is removable by an optical beam is deposited on its own circular plane. Since the outer circumference of the circular optical record medium is longer than the medium inner circumference, the medium speed should be faster when the optical beam is in the outer circurference than when the optical beam is in the inner circurference, so as to uniformly store an information having the constant transmission speed. Because of this, the conventional circular optical disc has a problem in that the constitution of the driving apparatus is overly complicated.

By way of illustration, the conventional master link for recording information on the circular optical record radium at a constant transmission speed and the conventional disc player for reproducing the information recorded on the circular optical record medium at a constant transmission speed comprise a device for detecting the position of the opticl beam on the circular optical record medium and another device for controlling the rotational speed of the optical record medium according to the position of the optical beam, so as to control the speed of the optical record medium according to the position of the optical beam. The conventional master link and disc player will be described in detail with reference to Figs. 1 to 3.

With reference to Fig. 1, it is illustrated a conventional master link comprising an information source 9 and a sub-coding signal generator 10. The information source 9 generates digital audio or video signal and supplies the generated signal to a CD signal generator 5. The sub-coding signal generator 10 generates a sub-code including coded information indicating the type of the information source and the CD track and supplies the sub-code to the CD signal generator 5. The CD signal generator 5 then adds the sub-code supplied from the sub-coding signal generator 10 to the audio or video signal supplied from the information source 9 in order to generate a mixed signal. The CD signal generator 5 then eight-to-fourteen modulates (EFM) the mixed signal in order to generate a radio frequency (RF) signal. The conventional master link further comprises a record laser 1 such as an argon (Ar) laser, a helium-cadmium (He-Cd) laser, etc. for generating an optical beam to supply the optical beam to an optical modulator 2. The optical modulator 2 adjusts the intensity of the optical beam supplied form the record laser 1 according to the RF signal supplied form the CD signal generator 5 and modulates the RF signal into an optical signal. The optical modulator 2 irradiates the modulated optical signal on an optical disc 3 via a mirror 7 and an objective lens 8. The optical signal irradiated on the optical disc 3 is focused by the objective lens8. the optical signal focused by the objective lens 8 removes the photoresist deposited on the optical disc 3, thereby making on the surface of the optical disc 3 uneven. The objective lens 8 and the mirror 7 is moved in the radial direction of the optical disc 3 by the feeding device 6. The record laser 1, the optical modulator 2, the mirror 7 and the objective lens 8 are devices for constituting a pick-up. Also, the conventional master link comprises a spindle motor 4 for rotating the optical disc 3 under the control of a microcomputer 11. The microcomputer 11 calculates the rotational speed of the disc according to the position of the pick-up by the pick-up position information supplied from the pick-up position detector (not shown) connected to its own input terminal 12. The microcomputer 11 then drives the spindle motor 4 according to the calculated rotational speed. The rotational speed of the spindle motor 4 driven by the microcomputer 11 is gradually increased as the pick-up roves from the outer portion of the disc to the inner portion.

Meanwhile, Fig. 2 shows a conventional disc player comprising a pick-up 11 for reading out an RF signal from theoptical disc 3. the pick-up 13 irradiates an optical beam on the optical disc 3 and converts the reflective optical beam reflected by the optical disc into an electrical signal. The electrical signal generated by the pick-up 13 comprises an RF (Radio Frequency) signal having an information recorded on the optical disc 13, a focus signal for adjusting the distance between the pickup 13 and the optical disc 3, and a tracking signal for tracking the track of the optical disc 3. The RF signal generated in the pick-up 13 is waveform-shaping in an analog waveform shaping portion 12 and is supplied to a sync detector 19 and a phase locked loop 20. The phase locked loop 20 restores a data clock train from the waveform-shaped RF signal supplied from the analog waveform shaping portion 12 and supplies the data clock train to the sync detector 19, a digital signal processor 16, and a spindle servo portion 21. The frequency of the data clock train is varied according to the linear velocity of the optical disc 3. The sync detector 19 separates a frame sync signal from the waveform-shaped RF signal supplied from the analog waveform shaping portion 12 by the data clock train received from the phase locked loop 20 and supplies the separated frame sync signal with the RF signal to the digital signal processor 16. The digital signal processor 16 receives the RF signal and frame sync signal from the sync detector 19, the restored data clock train from the phase locked loop 20, and also the reference clock train from the oscillator 22. The digital signal processor 16 EF-demodulates the RF signal to generate EF-demodulated digital data including

digital audio or video data, an error correcting parity, and sub-code. Also, the digital signal processor 16 separates the digital audio or video data and the error correcting parity from the EF-demodulated digital data by the frame sync signal and the restore data clock train and corrects errors generated in the separated digital audio or video data by the error correcting parity. After this, the digital signal processor 16 time-base-corrects the error corrected digital audio or video data by the reference clock train and supplies the time-base-corrected digital audio or video date to a digital to analog converter (hereinafter referred to as "D-A converter") 17. The D-A converter 17 converts the digital audio or video data supplied from the digital signal processor 16 into an analog audio or video signal and outputs the analog video or audio signal through an output terminal. The conventional disc player further comprises a sub-code detector 18 for detecting a sub-code from the EF-demodulated digital data received from the digital signal processor 16 by a predetermined timing signal. The sub-code detector 18 supplies the detected sub-code to a tracking servo 15. The tracking servo 15 moves the pickup 13 by one track width of the optical disc 3 whenever a sub-code is supplied from the sub-code detector 18. And, the tracking servo 15 adjusts the position of the pick-up 13 by the tracking signal supplied from the pick-up 13 so that the optical beam irradiated on the optical disc 3 tracks the track of the optical disc 3. Also, the conventional disc player includes a spindle servo 21 for inputting the restored data clock train supplied from the phase locked loop 20 and the reference clock train supplied from the oscillator 22. The spindle servo 21 compares the reference clock train and the data clock train and controls the rotational speed of the spindle motor 4 according to the result. In other words, the spindle servo 21 increses the rotational speed of the spindle motor 4 when the frequency of the reference clock train is higher than that of the data clock train. Contrarily, when the frequency of the reference clock train is lower than that of the data clock train, the spindle servo 21 decreases the rotational speed of the spindle motor 4. The conventional disc player still comprises a focus servo 14 for adjusting the distance between the pick-up 13 and the disc according to the focus signal received from the pick-up 13 in order to put the optical beam irradiated on the disc in focus.

As described above, the conventional master link must comprise motor control modules (i.e., a pick-up position detector and a microcomputer) for calculating the rotational speed of the disc according to the position of the pick-up 13 and for controlling the rotational speed of the spindle motor so as to uniformly record information on the disc. In order to reproduce at a contant speed the information recorded on the disc, the conventional disc player must comprise rotation controlling modules (i.e., a phase locked loop, an oscillator, and a spindle servo) for comparing the information rate reading out from the disc by the pick-up with the reference information rate in order to control the rotational speed of the spindle motor and time base correcting modules (i.e., a sync detector, a phase locked loop, and an oscillator) for time-base-correcting the information read out from the disc.

As described above, the circular optical record medium has disadvantages in that the constitution of the driving apparatus is complicated and the size of the driving apparatus is large. Also, if the center is wrongly determined during manufacturing, an eccentricity is generated when the circular optical record medium rotates, so that the driving apparatus cannot record and reproduce the data exactly. moreover, since the circular optical record medium is easily vibrated by an external shock, which shock would prevent the driving apparatus from recording and reproducing the data exactly.

For reference, the region of the optical disc 3 where the information is recorded is the area S from the outermost circumferen to that predetermined inner circumference which has a maximum rotational speed that can keep a constant linear velocity:

$$S = \int_{r2}^{r1} 2\pi r \, dr \qquad \cdots\cdots\cdots\cdots (1)$$

In the above equation (1), r1 is a radius of the outermost circumference, and r2 is a radius of a predetermined inner circumference. Accordingly, the information storage area of the conventional optical disc having an outermost circumference radius of 6Cm and a predetermined inner circumference radius 2cm is $100cm^2$. FIG.3 shows an information storage region of the conventional optical disc. In FIG. 3, S is an information storage region and r1 and r2 are radiuses of outermost circumference and predetermined inner circumference, respectively.

## Summary of the Invention

Accordingly, it is an object of the present invention to provide an optical record medium which can simplify the constitution of the optical record medium driving apparatus.

It is another object of the present invention to provide an optical record medium driving apparatus of a simplified constitution which can drive the optical record medium.

It is still another object of the present invention to provide a process for manufacturing the optical record medium as described in the above object.

To achieve the object, the optical record medium of the present invention comprises a cylindrical structure and a photoresist layer deposited of the circumferential surface of the structure.

To achieve another object, the optical record medium driving apparatus of the present invention comprises a cylindrical optical record medium for uniformly storing information, a constant speed motor for rotating the cylindrical optical record medium at a constant speed, pick-up means for recording the information on the circumferential surface of the cylindrical optical record medium and reading out the information from the cylindricl optical record medium, and information processing means for supplying the recording information to the pick-up means and processing the information read out by the pick-up means.

To achieve still another object, the process for manufacturing the optical record medium comprises the steps of manufacturing a cylinder of plastic material and a photoresist ribbon, and pressin the photoresist ribbon on the outer circumferential surface of the cylinder formed in the manufacturing step by a pair of pressing rollers.

## Brief Description of the Drawings

The above objects and other advantages of the present invention will become more apparent by describing the preferred embodiment of the present invention with reference to the attached drawings, in which:

FIG. 1 is a block diagram of a conventional master link;

FIG. 2 is a block diagram of a conventional disc player;

FIG. 3 shows an information storage region of a conventional optical record medium;

FIG. 4 is a block diagram of a master link according to an embodiment of the present invention;

FIG. 5 is a block diagram of a cylindrical optical record medium player according to an embodiment of the present invention;

FIG. 6 is a schematic diagram of an apparatus for manufacturing the optical record medium according to the present invention;

FIG. 7 is a view illustrating an information storage region of a cylindrical optical record medium where data is recorded by the master link shown in FIG. 4; and

FIG. 8 is an exploded schematic view of the cylindrical optical record medium player applicable to the present invention.

## Detailed Description of the Invention

With reference to FIG. 4, it is illustrated a master link according to an embodiment of the present invention comprising an information source 101 for generating a digital data to supply the digital data to a recording signal generator 103 and a sub-coding signal generator 102 for generating a sub-code to supply the sub-code to the recording signal generator 103. The digital data includes a video signal and an audio signal added to an error correcting code. The sub-code has information indicating the type of information source. The recording signal generator 103 mixes the digital data from the information source 101 and the sub-code from sub-coding signal generator 102 and EF-modulates the mixed digital data to generate a recording signal or RF signal. Also, the recording signal generator 103 supplies the RF signal to an optical modulator 104.

The master link further comprises a record laser 105 for generating a recording optical beam to supply the optical beam to the optical modulator 104. The record laser 105 is an argon laser or a helium-cadmium laser, and generates a laser beam having an intensity adeguate to remove the photoresist deposited on the circumferential surface of a cylindrical optical record medium (hereinafter referred to as "CORM") 110. The optical modulator 104 adjusts the intensity of the optical beam supplied from the record laser 105 according to the RF signal supplied from the recording signal generator 103, thereby converting the RF signal of electrical signal type into an optical signal type. The optical modulator 104 irradiates the intensity-adjusted optical beam on the circumferential surface of the CORM 110 through a rirror 106 and an objective lens 107. At this time, the mirror 106 reflects the optical beam from the optical modulator 104, thereby making the optical beam perpendicular to the center axis of the CORM 110. The objective lens 107 focuses the optical beam reflected by the mirror 106 and irradiates the focused optical beam on the circumferential surface of the CORM 110. Also, the objective lens 107 and mirror 106 move in the axial direction of the CORM 110 by one track width by a feeding device 108 whenever the CORM 110 rotates once.

Also, the master link comprises a rotor 109 for rotating the CORM 110. The rotor 109 is a constant speed motor having a constant rotational speed and rotates the CORM at a constant rotational speed. The CORM 110 has a photoresist layer deposited on its own circumferential surface, and stores information by means of the photoresist layer, The photoresist layer will be partially depending on the intensity of the focused optical

beam supplied from the objective lens 107, and it stores the RF signal.

With reference to FIG. 5, it is illustrated a CORM player according to the present invention comprising a pick-up 111 for reading out the RF signal recorded on the CORM 110. The pick-up 111 irradiates an optical beam on the circumferential surface of the CORM 110 and converts the optical beam reflected by the CORM 110 into a form of electrical signal, thereby generating an RF signal, a focus signal, and a tracking signal. The RF signal has information (i.e., audio and video) recorded on the CORM 110, and is supplied to an analog waveform shaping portion 112. The focus signal is a signal for adjusting the distance between the pickup 111 and the circumferential surface of the CORM 110, and is supplied to a focus servo 117. The tracking signal is a signal for positioning the optical beam in the information track formed on the circumferential surface of the CORM 110, and is supplied to a tracking servo 116. The analog waveform shaping portion 112 waveform-shapes the RF signal supplied from the pickup 111 in order to supply the waveform-shaped RF signal to a digital signal processor 113. The RF signal outputted from the analog waveform shaping portion 112 is an the EF-modulated signal having a square waveform. The digital signal processor 113 EF-demodulates the waveform-shaped RF signal supplied from the analog waveform shaping portion 112 in order to generate an EF-demodulated digital signal. Also, the digital signal processor 113 corrects the error of the EF-demodulated digital signal to supply the error corrected digital signal to a D/A converter 114. The D/A converter 114 converts the digital signal from the digital signal processor 113 into an analog signal and outputs the converted analog signal through output terminals 118 and 119. At this time, the analog signal supplied to the output terminals 118 and 119 includes audio information and video information.

The CORM player further comprises a sub-code detector 115 for receiving the EF-demodulated digital signal from the digital signal processor 113. The sub-code detector 115 samples the EF-demodulated signal by a predetermined tiring signal to detect sub-code. The sub-code detector 115 supplies the detected sub-code to a tracking servo 116. The tracking servo 116 moves the pick-up 111 in the axial direction of the CORM 110 by one information track width whenever the detected servo code is received from the sub-code detector 115. Also, the tracking servo 116 finely moves the pick-up 111 according to the tracking signal received from the pick-up 111, causing the optical beam irradiated on the CORM 110 to track the information track of CORM 110. Meanwhile, the focus servo 117 receiving focus signal from the pick-up 111, adjusts the distance between the pick-up 111 and the circumferential surface of the CORM 110 according to the focus signal to put the optical beam irradiated on the circumferential surface of the CORM 110 in the focus.

Also, the CORM player comprises the motor 109 for rotating the CORM 110. The motor 109 is a constant speed motor, and rotates the CORM 110 mounted on it own rotation axis at a constant speed.

FIG. 6 schematically shows an apparatus for manufacturing the CORM illustrated in FIGs. 4 and 5. In FIG. 6, the CORM manufacturing apparatus comprises a first pressing roller 120 which is disposed on the central axis of a plastic cylindrical structure 125 and heats the inner circumferential surface of the cylindrical structure 125. The first pressing roller 120 is mounted on the upper portion of the first rotation axis 121 and is rotated with the cylindrical structure 125 as the first rotation axis 121 rotates.

The CORM manufacturing apparatus additionally comprises a second pressing roller 122 for pressing a photoresist onto the outer circumferential surface of the cylindrical structure 125. The second pressing roller 122 is fixed on the upper portion of a second rotation axis 123, in order to be adhered to the cylindrical structure 125, and is rotated as the second rotation axis 123 rotates. The photoresist 124 which has been adhered to the outer circumferential surface of the second pressing roller 122 is rotated with the second pressing roller 122, thereby being pressed onto the outer circumferential surface of the cylindrical structure 125. The second pressing roller 12 heats the photoresist 124 while the photoresist 124 is pressed on the outer circumferential surface of the cylindrical structure 125. When the photoresist 124 is pressed onto the cylindrical structure 125, a high temperature is supplied to the contact portion between the photoresist 124 and the cylindrical structure 125. As described above, the CORM manufacturing apparatus presses the photoresist 124 onto the plastic cylindrical structure 125 by the first and second pressing rollers 120 and 122, thereby manufacturing the CORM.

FIG. 7 is a view for explaining the storage region of the CORM where an information is recorded by the master link shown in FIG. 4. With reference to FIG. 7, the storage region of the CORM is an outer circumferential surface of the CORM 110, whose surface S is $S = 2\pi r3Lcm^2$. Here, r3 is the radius of the CORM, and L is the height of the CORM 110.

If the radius r3 of the CORM 110 is 2Cm and the height L of the CORM 110 is 8Cm, the area S of the storage region of the CORM 110 is $200cm^2$ .

FIG. 8 is an exploded schematic view of the partially cutaway CORM player. In FIG. 8, the CORM player comprises a hexahedral CORM driver 127 mounted on one inner side of a main body 126. The CORM driver 127 comprises a cylindrical supporting case 128 for receiving and supporting the CORM, and a first star grip 129 being rotatably mounted on the bottom of the supporting case 128 for rotating the CORM. The first star grip 129 is fixed in the rotation axis of the constant speed motor 109 which passes through the bottom of the

supporting case 128. The CORM driver 127 comprises a cover 131 which is rotatably mounted by a hinge 137 on the upper portion of the CORM driver 127. The cover 131 comprises a circular groove 132 for receiving the upper portion of the CORM on its own lover surface and a second star grip 134 protruded downward for rotatably supporting the upper portion of the CORM. The cover 131 further comprises a hook 133 which is opened and closed at a keeper 135 form on the front upper portion of the CORM driver 127.

Also, the CORM driver 127 comprises a guider 130 mounted on one side wall of the CORM for guiding the optical pick-up into the upper and lower sides of the CORM. The main body 126 of the CORM player comprises a display portion 136 for displaying the operational state of the CORM player on its own front surface.

As described above, according to the present invention, since the optical record medium is a cylindrical shape, there is an advantage in that the optical record medium can be exactly accessed as the optical record medium driving apparatus rotates the optical record medium at a constant speed. Moreover, the rotation controlling module of the optical record medium is removed, so that there is the advantage of a simplified constitution of the optical record medium driving apparatus.

## Claims

**1.** An optical record medium comprising:

a cylindrical structure; and

a photoresist layer deposited on the circumferential surface of said structure, for storing information transmitted by an optical signal.

**2.** A process for manufacturing the optical record medium as described in claim 1 comprising the steps of:

manufacturing a cylinder of plastic material and a photoresist ribbon; and

pressing said photoresist ribbon on the outer circumferential surface of said plastic cylinder formed in said manufacturing step by a pair of pressing rollers.

**3.** A process as described in claim 2, further comprising a step of heating a contact portion between said photoresist ribbon and said plastic cylinder when the photoresist ribbon and the plastic cylinder are pressed by said pair of pressing rollers,

**4.** A master link for recording information in a cylindrical optical record medium comprising:

an information source for generating digital data having video and audio information;

a sub-coding signal generator for generating a sub-code having information indicating a type of said information source and indicating an information track of the cylindrical optical record medium;

a recording signal generator for adding the sub-code supplied from said sub-coding signal generator into the digital data supplied from said information source and modulating said added data, thereby generating an RF signal adaptive to be recorded on said cylindrical optical record medium;

an optical signal generator for generating a recording optical signal;

an optical modulator for adjusting the intensity of the optical signal supplied from said optical signal generator depending on the RF signal supplied form said recording signal generator, to irradiate the adjusted optical signal on said cylindrical optical record medium;

optical focusing means being installed between said optical modulator and said cylindrical optical record medium for focusing the optical signal supplied from said optical modulator; and

a constant speed motor for rotating said optical modulator at a constant speed.

**5.** A master link as claimed in claim 4, wherein said optical signal generator is a helium-cadmium laser.

**6.** A master link as claimed in claim 4, wherein said optical signal generator is an argon laser.

**7.** A cylindrical optical record medium player for reproducing information recorded on a cylindrical optical record medium comprising:

a constant speed motor for rotating said cylindrical optical record medium at a constant speed;

an optical pick-up for reading out the information recorded on said cylindrical optical record medium;

a digital signal processor for demodulating the information read out by said optical pick-up and separating video and audio information and a sub-code having information on the type of information source and the track;

a D/A converter for converting information supplied from said digital signal processor into an analog signal; and

a tracking servo for controlling said pick-up according to the sub-code supplied from said digital signal processor so that said pick-up tracks the information track formed on said cylindrical optical record medium.

**8.** A cylindrical optical record medium player as claimed in claim 7, further comprising an analog waveform shaping portion being connected between said optical pick-up and said digital signal processor for waveform-shaping the information read out by said optical pick-up.

**9.** A cylindrical optical record medium player as claimed in claim 7, further comprising supporting means for supporting said cylindrical optical record medium so that said cylindrical optical record medium is rotated by said constant speed motor.

**10.** A cylindrical optical record medium player as claimed in claim 9, wherein said supporting means comprises:

a first star grip being fixed on the rotation axis of said constatn speed motor for supporting rotatably the lower portion of said cylindrical optical record medium; and

a second star grip for supporting rotatably the upper portion of said cylindrical optical record medium.

FIG.1

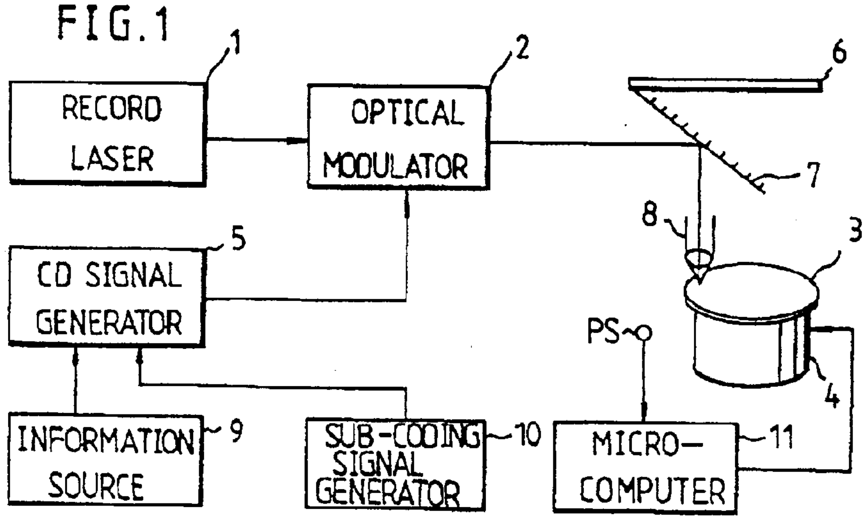
1
RECORD LASER
2
OPTICAL MODULATOR
6
7
8
3
5
CD SIGNAL GENERATOR
PS
4
INFORMATION SOURCE
9
SUB-CODING SIGNAL GENERATOR
10
MICRO-COMPUTER
11

FIG.2

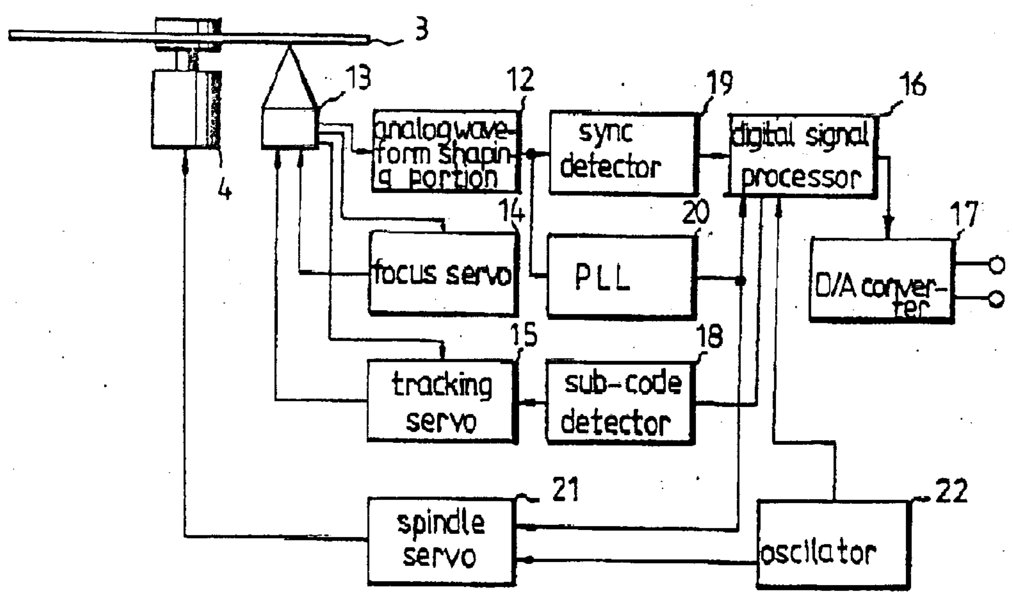
3
13
12
19
16
analog wave-form shaping portion
sync detector
digital signal processor
4
14
20
17
focus servo
PLL
D/A conver-ter
15
18
tracking servo
sub-code detector
21
22
spindle servo
oscilator

FIG.3

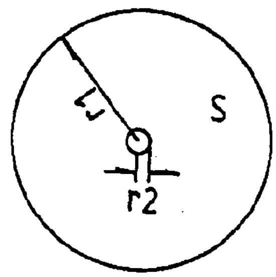
r1
S
r2

FIG.4

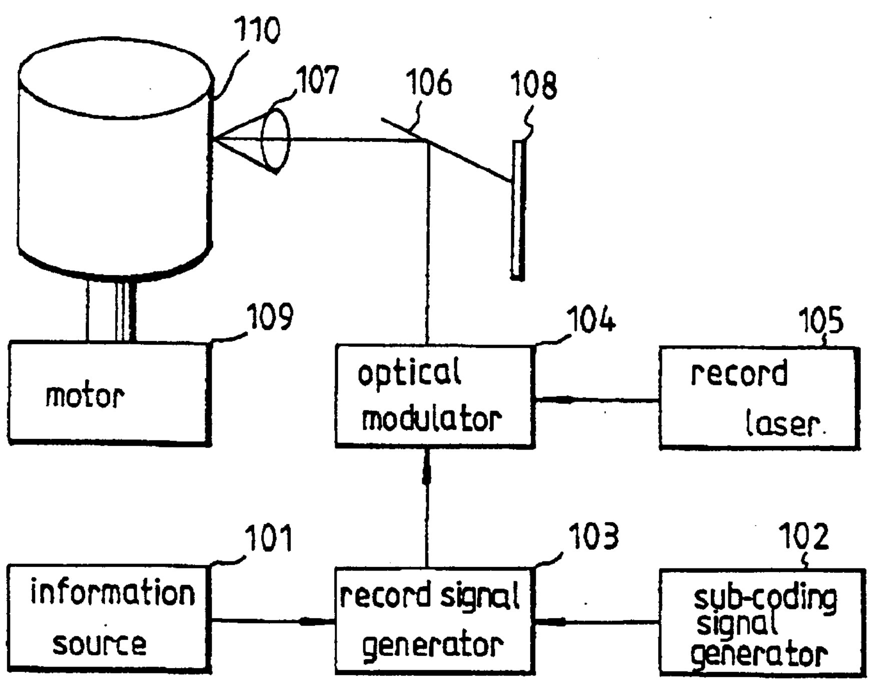
110
107
106
108
109
motor
104
optical modulator
105
record laser.
101
information source
103
record signal generator
102
sub-coding signal generator

FIG.5

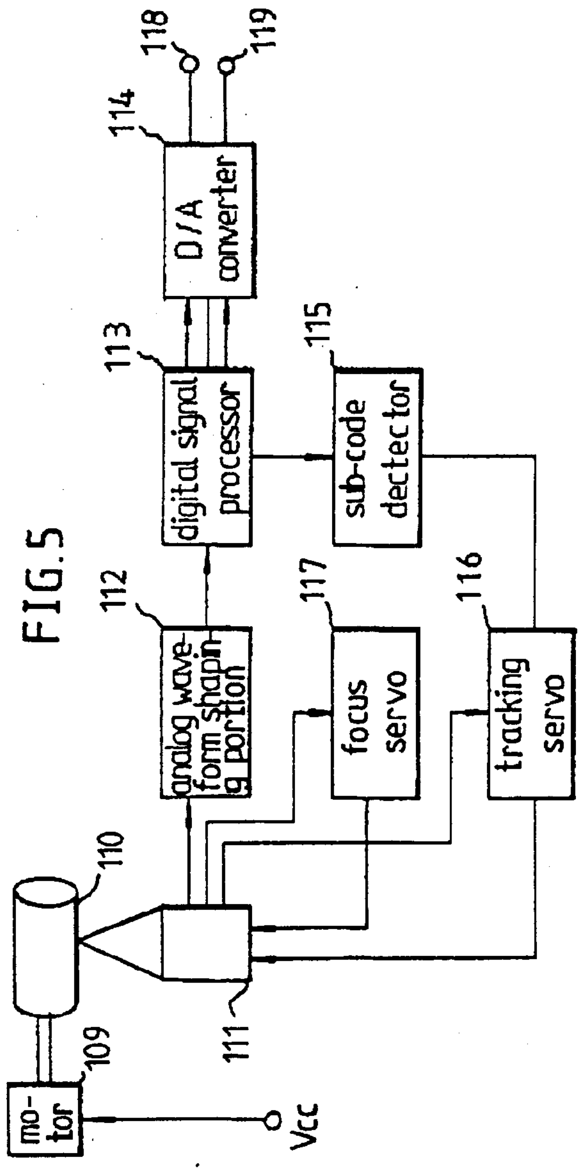


FIG.6

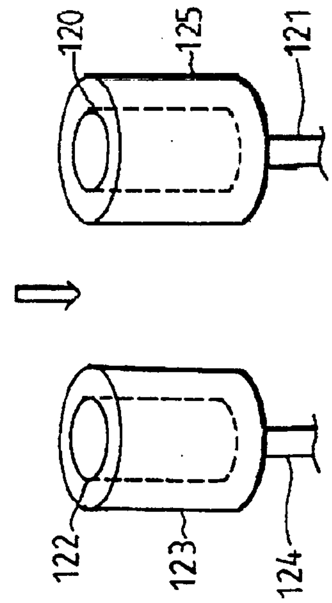


FIG.7

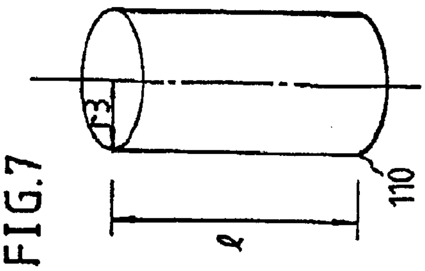

FIG. 8

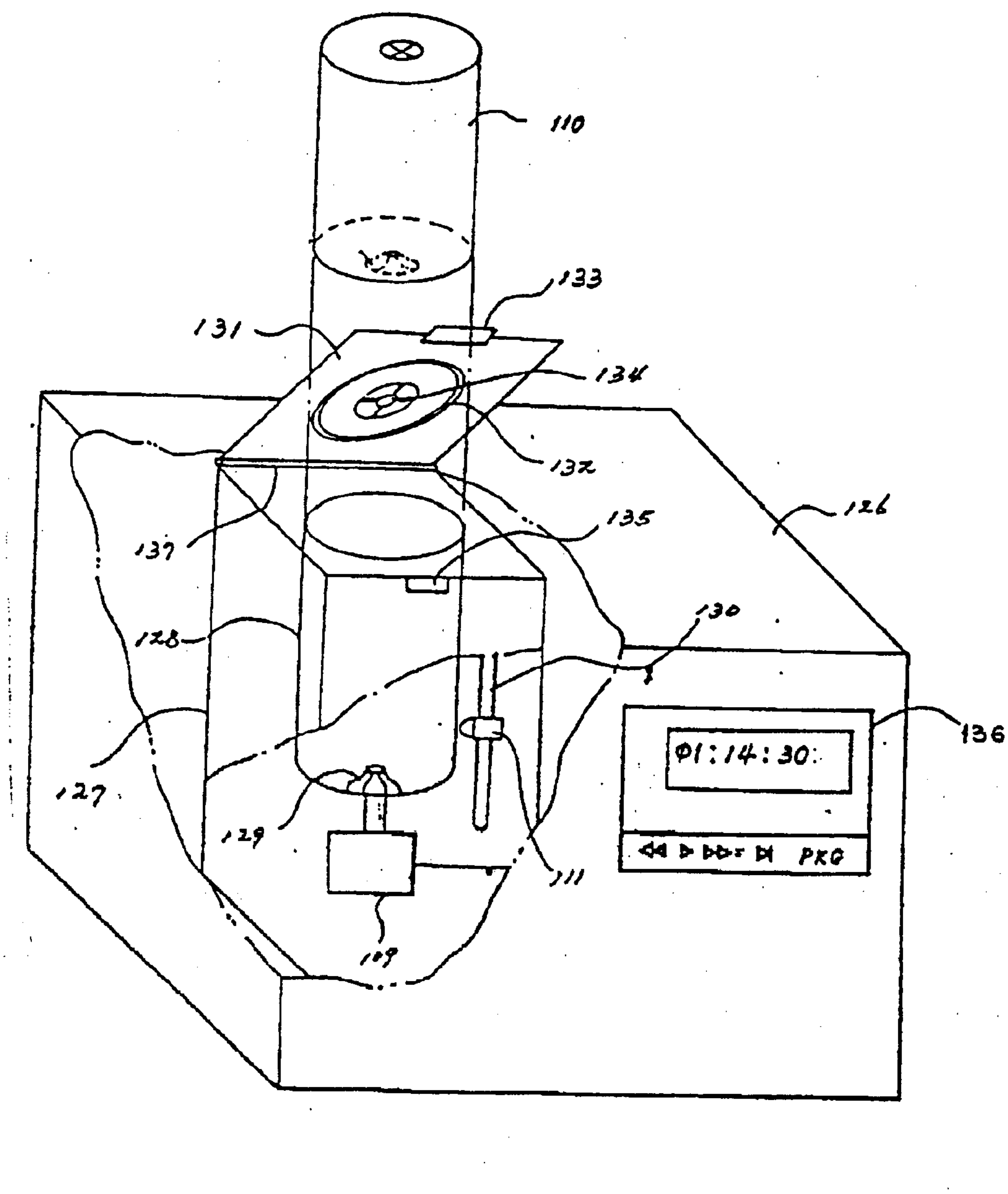
110
133
131
134
132
126
135
137
130
128
136
Φ1:14:30:
PKG
127
129
111
109

European Patent Office

# EUROPEAN SEARCH REPORT

Application Number

| DOCUMENTS CONSIDERED TO BE RELEVANT | | | EP 92304158.6 |
|---|---|---|---|
| Category | Citation of document with indication, where appropriate, of relevant passages | Relevant to claim | CLASSIFICATION OF THE APPLICATION (Int. Cl.5) |
| X<br><br><br>A | GB - A - 2 151 066 (NIGEL GEOFFREY LEY)<br>* Fig. 1; abstract *<br>* Column 1, line 6 - column 2, line 87 *<br>-- | 1,7,9<br><br><br>2,4,5,6 | G 11 B 7/00<br>G 11 B 25/02<br>G 11 B 7/24<br>G 11 B 7/26 |
| A | EP - A - 0 325 838 (ENERGY CONVERSION DEVICES INC.)<br>* Fig. 1-7; abstract *<br>-- | 1,2,4,5,6,7,9 | |
| A | PATENT ABSTRACTS OF JAPAN, unexamined applications, P field, vol. 13, no. 141, April 7, 1989 THE PATENT OFFICE JAPANESE GOVERNMENT page 68 P 853<br>* Kokai-no. 63-306 582 (YASUYOSHI SATO) *<br>---- | 1,2,4-7,9 | |
| | | | TECHNICAL FIELDS SEARCHED (Int. Cl.5) |
| | | | G 11 B 7/00<br>G 11 B 25/00<br>G 11 B 19/00 |

The present search report has been drawn up for all claims

| Place of search | Date of completion of the search | Examiner |
|---|---|---|
| VIENNA | 21-07-1992 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)